# EUROPÄISCHE PATENTSCHRIFT

(11) **EP 3 510 587 B1**
(45) Veröffentlichungstag und Bekanntmachung des Hinweises auf die Patenterteilung: **06.11.2024**
(21) Anmeldenummer: 17783702.8
(22) Anmeldetag: 06.09.2017
(51) Int. Cl.: G09B 23/28, G09B 23/30

(54) **CHIRURGISCHES SIMULATIONSGERÄT**
SURGICAL SIMULATOR
SIMULATEUR CHIRURGICAL

(30) Priorität: 06.09.2016 DE 102016116677
(43) Veröffentlichungstag der Anmeldung: 17.07.2019
(73) Patentinhaber: Universität Duisburg-Essen, 45141 Essen (DE)
(72) Erfinder: NOVOKHATSKIY, Ivan, 45147 Essen (DE)
(74) Vertreter: IPrime Bonnekamp Sparing Patentanwaltsgesellschaft mbH
(86) Internationale Anmeldenummer: PCT/DE2017/100747
(87) Internationale Veröffentlichungsnummer: WO 2018/046061

(56) Entgegenhaltungen:
- DE-U1- 9 003 733
- TERENCE WALSH: "Customer Review", 11 July 2016 (2016-07-11), pages 1 - 2, XP055425172, Retrieved from the Internet <URL:https://www.amazon.com/gp/customer-reviews/R3TMCVO8I1EGJ0/ref=cm_cr_dp_d_rvw_ttl?ie=UTF8&ASIN=B018RLY6B2> [retrieved on 20171115]
- ANONYMOUS: "Eitech C101 Flachstäbe im HERfast Shop", 25 March 2016 (2016-03-25), pages 1 - 3, XP055425181, Retrieved from the Internet <URL:https://web.archive.org/web/20160325092432/http://www.herfast.de/Eitech-Metallbaukasten/Zubehoer-38/Eitech-C101-Flachstaebe-11-25-Loch--Winkel.html> [retrieved on 20171115]
- IVAN NOVOKHATSKIY ET AL: "Abstractsammlung Internationales SkillsLab Symposium 2016", XI. INTERNATIONALES SKILLSLAB SYMPOSIUM 2016, 31 March 2016 (2016-03-31), pages 1 - 2,38, XP055425053, Retrieved from the Internet <URL:https://www.uni-due.de/~ht0209/isls2016/wp-content/uploads/2016/03/isls2016_abstractsammlung.pdf> [retrieved on 20171115]

## Beschreibung

Die Erfindung betrifft ein chirurgisches Simulationsgerät zur Fixierung von Organ- und Gewebepräparaten, aufweisend mindestens zwei Halteelemente, die an einer Auflagefläche fixiert sind, wobei lateral an den Halteelementen an mindestens einer Stelle eine Bohrung zur Aufnahme von einem Lagerstift vorhanden ist, um den koaxial mindestens ein auf einer Kreis- oder Rechtecklinie bewegbarer, perforierter Bügel angeordnet und durch die Bewegung des Bügels die Auflagefläche bogenförmig überspannbar ist, sowie die Verwendung eines solchen chirurgischen Simulationsgeräts zu medizinischen Trainingszwecken.

Die manuellen Fertigkeiten von Chirurgen sind trotz der raschen Entwicklung von Wissenschaft und Technik auch heute noch essentiell für den Behandlungserfolg. Fehler in der chirurgischen Technik können zu Komplikationen führen oder sie können sogar den Tod von Patienten nach sich ziehen. Die wichtigsten Grundfertigkeiten in der Chirurgie, wie korrekte Naht- und Knotentechnik, können an isolierten künstlichen und tierischen Organen trainiert werden.

So beschreibt die DE 411 73 57 A1 eine Spann- und Haltevorrichtung für menschliche Knochen, insbesondere Felsenbeine, mit einem Ausleger, an dessen äußeren Ende eine Spannzange mit relativ gegeneinander beweglichen Spannbacken angebracht ist.

Weiterhin ist in der US 2014/0349265 A1 ein chirurgisches Simulationsgerät offenbart, welches ein Gehäuse mit einer teilweise vorhandenen Aussparung aufweist, an der lateral an mindestens zwei Stellen Bohrungen zur Aufnahme von Lagerstiften vorhanden sind, um die Abdeckplatten koaxial geführt werden. Durch die koaxiale Anordnung der Abdeckplatten um die Lagerstifte kann ein in der Größe variables Arbeitsfeld eingestellt werden.

Die JP 2001-005378 A1 zeigt ein chirurgisches Simulationsgerät, aufweisend ein Gehäuse mit Abdeckplatte und einer in der Abdeckplatte vorhandenen Öffnung, wobei die Ränder der Abdeckplatte über Lagerstifte an dem Gehäuse befestigt sind. Innerhalb des Gehäuses können medizinische Präparate angeordnet werden, um mit Hilfe chirurgischer Werkzeuge Operations- oder Behandlungsmethoden zu simulieren.

Die US 54 03 191 A beschreibt ein chirurgisches Simulationsgerät, bei dem an einem Gehäuse seitlich verschwenkbare bügelartige Spiegel angebracht sind, die in Lagerstiften gehalten werden. Durch Ein- oder Ausklappen der Spiegel in die Öffnung des Gehäuses kann ein in der Größe variables Arbeitsfeld generiert werden.

Ferner ist in der EP 054 34 24 A2 ein Verfahren und eine Vorrichtung zur Durchführung von experimentellen Augenoperationen offenbart, bei dem ein an der Rückseite aufgeschnittenes Auge in eine Augenhalterung eingespannt und von einer oder mehreren Beleuchtungsquellen angestrahlt wird. Eine oder mehrere Videokameras sind dabei von der Rückseite des aufgeschnittenen Auges her in das Innere des Auges gerichtet, um die Instrumentenbewegungen im Inneren des Auges für einen von der Vorderseite des Auges her operierenden Chirurgen auf dem Videobildschirm sichtbar zu machen.

Auch ist aus der DE 900 37 33 U1 eine Vorrichtung zum Training von endoskopischen Behandlungen offenbart, die ein Halteelement aufweist, das Einstichstellen für Endoskopie-Instrumente und eine Grundplatte umfasst, auf der Simulationselemente für zu operierende Teile angeordnet und an dem jeweiligen Operationsort simulierende Teile sowie Trägerelemente für Endoskopie-Instrumente lokalisiert werden können.

Zu dem Stand der Technik zählt auch die DE 36 89 744 T2, die sich auf ein neurochirurgisches Hilfsgerät zur Verwendung bei Gehirnoperationen bezieht, d. h. auf einen Gehirnchirurgie- oder Gehirnabbildungsadapter, der für eine Schädelöffnung durchzuführende chirurgische Eingriffe zur Abbildung und/oder Tumorresektion bestimmt ist

Schließlich zeigt die DE 32 34 875 A1 eine Vorrichtung zum Herstellen eines Operationsfeldes in der Chirurgie, insbesondere der Mikrochirurgie, mit an Wundrändern oder dergleichen ansetzbaren Haken oder entsprechenden Halteelementen und mit außerhalb des Operationsfeldes festlegbaren Zugorganen wie Kugelketten fixierbar ist, wobei insbesondere zur Behandlung einer Harnröhre, eines männlichen Gliedes, ein polygoner Spannrahmen mit an einander gelengten Stegen vorgesehen ist, dessen Eckwinkel veränderlich festlegbar sind und von dessen Rahmenaußenseite zinnenartige Rastelemente für die Zugorgane abragen.

Auch wurden im Stand der Technik von Terence Walsh in "Customer Review" vom 11. Juli 2016 auf Seite 1 und 2 Halteelemente für eine Auflagefläche gefunden, die lateral an den Halteelementen mindestens eine Bohrung zur Aufnahme von einem Lagerstift (Schraube) aufweisen. Die Einstellung eines variablen Arbeitsfeldes mit der Bewegung eines über den Lagerstift geführten Bügel ist mit diesen Halteelementen nicht möglich, auch wenn man die in Eitech C101 in HERfaster Shop vom 25. März 2016 gefundene und gelochte Flachstäbe verwenden würde.

Die nach dem Stand der Technik bekannten Vorrichtungen sind jedoch monofunktionell, d.h. sie decken nicht das gesamte Trainingsspektrum für einen Chirurgen ab. Dies auch deswegen, da die Trainingsübungen durch die Größe der Trainingsvorrichtung und des Arbeitsfelds begrenzt sind.

Aufgabe der Erfindung ist es daher, die Entwicklung einer chirurgischen Vorrichtung zu Trainingszwecken die die chirurgische Fertigkeit, die operative Methodik und das Augenmaß des Operateurs fördert und verbessert und eine an den Bedürfnissen des jeweiligen Operationsvorgangs orientierte Organ- bzw. Gewebefixierung ermöglicht.

Die Aufgabe wird durch die Merkmale des unabhängigen Anspruchs 1 gelöst.

Das erfindungsgemäße chirurgische Simulationsgerät weist in seiner Basisstruktur eine Auflagefläche auf, die als Untergrund für einen Operationsbereich oder ein Arbeitsfeld dient. Die Auflagefläche kann dabei eine Tischfläche oder eine Behandlungsunterlage darstellen, wie sie in Operationssälen Anwendung findet, oder auch eine vorgeformte Unterlage als Grund- und/oder Arbeitsplatte darstellen. Die Auflagefläche kann in ihrer Ausgestaltung kreisförmig, ellipsenförmig, rechteckig oder auch polygon sein. Es können alle Materialien für die Auflagefläche Verwendung finden, solange die Materialien den Anforderungen an eine praktische Durchführung eines simulierten Operationsverlaufs Rechnung tragen. Insbesondere kann die Auflagefläche aus Metall, Stein, Glas oder Kunststoff bestehen sowie eine Kombinationen aus diesen Materialien umfassen.

An der Auflagefläche befinden sich lateral mindestens zwei Halteelemente. Unter Halteelementen sind erfindungsgemäß solche Vorrichtungsbestandteile zu verstehen, die mindestens eine Bohrung aufweisen in der ein Lagerstift angeordnet ist und über die mindestens ein Bügel geführt wird. Die Halteelemente können selbstständige Bauelemente oder auch Teil einer Gesamteinheit wie beispielsweise Elemente einer Grund- und/oder Arbeitsplatte sein. Unter Bügel ist erfindungsgemäß ein gebogenes Rahmenelement zu verstehen, dass den Raum oberhalb der Auflagefläche bzw. des Arbeitsfelds überspannt und den Bereich zwischen Arbeitsfeld und Rahmenelement als chirurgischen Simulationsraum variabel durch koaxiale Bewegung entlang einer Kreis- oder Rechtecklinie einschließen oder begrenzen kann. Der Begriff gebogenes Rahmenelement umfasst dabei sowohl halbkreisförmige als auch rechteckige Strukturen, die einen radialen Durchmesser in einem Bereich von 0,5 cm bis 5 cm aufweisen. Die Länge der Bügel und damit auch die Größe des Arbeitsfelds sind variabel. Die Länge der Bügel beträgt in der Regel zwischen 5 cm und 50 cm, bevorzugt 25 cm, besonders bevorzugt 10 cm. Die Bügellängen können auch an verschiedenen Halteelementpaaren unterschiedlich sein. So können die Bügel an einem Halteelementpaar, die gegenüberliegende oder zueinander angrenzende Haltelemente mit mindestens einer Bohrung, jeweils einem Lagerstift und mindestens einem Bügel umfassen gegenüber anderen Halteelementpaaren in ihrer Länge und/oder Breite variieren. Die Bügel sind dabei so angeordnet, dass mindestens ein Bügel an mindestens zwei Halteelemente befestigt ist, d.h. dass mindestens ein Bügel über jeweils mindestens einen Lagerstift an mindestens zwei Halteelementen geführt wird. Die Bügel können an allen Halteelementen auch dieselben Abmessungen und Ausdehnungen in Form, Durchmesser und Länge aufweisen.

Der Begriff koaxiale Bewegung bzw. Verschwenkung bedeutet, dass mindestens ein Bügel entlang einer Kreis- oder Rechtecklinie an jeweils zwei Halteelementen geführt werden kann. Indem die Bügel durch eine Drehbewegung in die Ebene der Auflagefläche bzw. des Arbeitsfelds bewegt bzw. aus dieser ausgelenkt werden können, kann in Abhängigkeit von der Länge und Biegung der Bügel und der Drehbewegung ein Teil der Auflagefläche als Arbeitsfeld überspannt werden. Der Bereich der Auflagefläche, der zumindest teilweise durch die Bügel bei der koaxialen Bewegung überdeckt werden kann, ist als das darunter liegende Arbeitsfeld definiert.

Werden zwei Bügel über zwei einander gegenüberliegende Lagerstifte der Halteelemente geführt, so kann der zwischen den Bügeln liegende Bereich als Arbeitsfeld durch Schwenkung der Bügel generiert werden, d.h. das Arbeitsfeld bzw. der Arbeitsbereich kann vergrößert oder verkleinert werden, je nachdem wie weit die Bügel relativ zueinander gedreht werden. Werden noch weitere Halteelemente an der Auflagefläche befestigt, so können, wenn beispielsweise vier Halteelemente vorhanden und die Halteelemente jeweils um 90° versetzt zu einander angeordnet sind, bei einer Schwenkbewegung von jeweils zwei Bügeln an einem Halteelementpaar um jeweils 45° zur Mitte der Auflagefläche das Arbeitsfeld weiter unterteilt werden, indem ein rautenförmiger Raum oder eine rautenförmige Fläche zwischen den orthogonal zueinander angeordneten Halteelementen unter den Bügeln als Arbeitsfeld erhalten wird . Der Bereich zwischen den Bügeln kann variabel vergrößert oder verkleinert werden, je nachdem wie weit die Bügel relativ zueinander gedreht werden. Es ist jedoch auch denkbar drei, fünf, sechs oder mehr Haltelemente zu verwenden, die einen relativen Abstand voneinander beispielsweise von 120°, 72°, 60° etc. einnehmen. Der Vorteil der variabel einstellbaren Größe des Arbeitsfelds oder Arbeitsbereichs ist, dass je nach der medizinischen Indikation oder der anzuwenden Operationstechnik eine entsprechende Größe des Operationsbereichs als Arbeitsfeld mit einer unterschiedlichen Halteelementanzahl erfolgen kann. So kann es geboten sein zwei, drei oder weitere Bügel an den Halteelementen zu befestigen, je nachdem welche Aufgabenstellung eine Unterteilung oder Überbauung des Arbeitsbereichs notwendig macht. Es ist jedoch auch möglich die Auflagefläche ohne Unterteilung durch die Bügel als Arbeitsfeld zu verwenden oder die Bügel in der Ebene der Auflagefläche bzw. des Arbeitsfeldes zu belassen, d.h. keine Relativbewegung der Bügel zueinander auszuführen. So soll es auch möglich sein bei einem oder mehreren an zwei denselben Halteelementen angeordneten Bügeln, die konzentrisch miteinander geführt werden, keine Vergrößerung oder Verkleinerung des Arbeitsfelds bzw. des Arbeitsbereichs durchzuführen. In so einem Fall können der oder die bogenförmigen Bügel die Auflagefläche bei einer Drehbewegung als Rahmenelement überspannen und definieren als Arbeitsfeld den Bereich, der unterhalb der Bügel liegt und radial durch den Verlauf der Bügel auf einer Kreis- oder Rechtecklinie begrenzt ist.

Die Halteelemente können kraftschlüssig mit der Auflagefläche und den Halteelementen verbunden werden, wobei die Halteelemente durch Verschrauben oder Verklemmen an der Auflagefläche fixierbar sind. Die Halteelemente können in einem Teilbereich c-förmig oder klammerförmig ausgestaltet sein. Beispielhaft aber nicht abschließend können die Halteelemente in einem Teilbereich schraubzwingenförmig oder federklemmenförmig ausgestaltet sein. Die Halteelemente müssen jedoch keine Fixierungsmöglichkeit aufweisen, d.h. sie können auch eine Ausgestaltung ohne Schraubzwingen- oder Federklemmenform aufweisen. Insbesondere können die Halteelemente lediglich als kompakte Baueinheit in Form eines Stativs oder Fundaments ausgestaltet oder Bestandteil einer Grund- oder Arbeitsplatte sein.

In den Halteelementen ist mindestens eine Bohrung vorhanden, in der ein Lagerstift angeordnet ist. Die Bohrung kann dabei vollständig die Halteelemente durchdringen oder auch als Sacklochbohrung ausgestaltet sein. Über die Lagerstifte wird bei mindestens zwei Halteelementen mindestens ein Bügel geführt, der die Arbeitsfläche als Rahmenelement bogenförmig überspannt. Bogenförmig bedeutet vorliegend, dass die Bügel halbkreisförmig zur gegenüberliegenden Seite der Auflagefläche geführt bzw. über die Lagerstifte in den Halteelementen geführt werden. Die Bügel können dabei von einer zur anderen Seite diagonal oder versetzt diagonal geführt angeordnet werden. Es ist auch möglich die Bügel als rechteckige U-Bügel auszugestalten. Welche Ausführungsform gewählt wird hängt vom jeweiligen Einsatzzweck und der möglichen Ausgestaltung des Arbeitsfeldes ab.

An den Halteelementen können weitere Bohrungen vorhanden sein, die zur Aufnahme von Befestigungselementen, Fixierungselementen, Justierungselementen und/oder elastischen Adapter dienen. Ebenso können an den Bügeln Befestigungselemente, Fixierungselemente, Justierungselemente und/oder elastischen Adapter angeordnet werden, die mit oder ohne Bohrungen an den Bügeln durch Verschrauben oder Verklemmen befestigt werden können.

Unter Befestigungselementen sind erfindungsgemäß beispielhaft aber nicht abschließend Operationswerkzeuge oder Operationshilfsmittel wie Haken, Stäbe, Klammern, Nadeln, Faden, Federn und/oder Fadenhalter zu verstehen. An den Halteelementen und/oder den Bügeln können unmittelbar Befestigungselemente angeordnet sein.

Unter Fixierungselementen ist ein Vorrichtungsbestandteil zu verstehen, an dem eine Fixierung eines externen Materials, beispielsweise ein Faden zur Generierung eines chirurgischen Knotens oder ein Gewebepräparat befestigt werden kann. Dabei kann das Fixierungselement beispielsweise in Form eines Hakens oder einer Öse ausgestaltet sein. Die Fixierungselemente können beispielsweise auch als Metallstäbe oder Gummis vorhanden sein. Die Fixierungselemente können über laterale Bohrungen im Bereich der Halteelemente mit diesen verbunden bzw. mit diesen verschraubt werden.

Unter Justierungselementen können erfindungsgemäß schienenförmige Auflageelemente verstanden werden, die den Bereich der Auflagefläche bzw. des Arbeitsfelds schienenförmig durchziehen. An diese Justierungselemente können erfindungsgemäß Fixierungselemente befestigt werden, die entlang der schienenförmigen Oberfläche der Auflageelemente eine Justierung der Fixierungselemente an den Halteelementen nach Bewegung, beispielsweise durch Verschiebung ermöglichen. So ist es möglich Feder- oder Klemmelemente, die beispielsweise schlittenförmige Aufsätze aufweisen auf den Justierungselementen zu bewegen und zu verschieben, um diese in eine gewünschte Position für ein Gewebepräparat für einen Operateur zu bringen. Die schlittenförmigen Aufsätze können zur besseren Befestigungsmöglichkeit eines Gewebepräparates über Kugelgelenke verfügen, d.h. sie sind beweglich ausgestaltet um ein Gewebepräparat in einem geneigten Winkel befestigen zu können. Nach Positionierung der Fixierungselemente werden diese an den Justierungselementen mit Schrauben gehalten.

Die Justierungselemente können als Teil des Materials der Halteelemente aus diesem als Materialbestandteil ausgefräst sein und eine grobe Oberflächenstruktur in Form einer Riffelung aufweisen. Dies ermöglicht eine stufenähnliche Justierung der Fixierungselemente an den Justierungselementen. Es können aber auch in einer besonderen Ausführungsform des Erfindungsgegenstandes Justierungselemente an den Halteelementen befestigt werden, beispielsweise als Einsatz.

Es hat sich herausgestellt, dass es vorteilhaft ist zwei oder mehrere Bügel an Halteelementen zu befestigen an denen mehrere Fixierungselemente und/oder Befestigungselemente befestigt werden können. Zu diesen zählen beispielhaft aber nicht abschließend Operationswerkzeuge oder Operationshilfsmittel wie Haken, Stäbe, Klammern, Nadeln, Faden, Fadenhalter und/oder Schraubzwingen. Durch die Anordnung der Fixierungselemente oder Befestigungselemente an den Bügeln können im Arbeitsbereich mehrere Operationswerkzeuge oder Operationshilfsmittel lokalisiert werden. Es ist in einer besonderen Ausgestaltung des Erfindungsgegenstands möglich, dass die Befestigungselemente und/oder Fixierungselemente an den Halteelementen unmittelbar befestigt sind. Eine unmittelbare Befestigung kann insbesondere bei formelastisch und/oder formgedächtnis-elastisch ausgestaltbaren Fadenhaltern vorteilhaft sein, wenn diese von ihrer Größe und ihrem Gewicht her eine positionsbezogene Stabilität benötigen. Es ist jedoch auch möglich Fadenhalter an den Befestigungselementen zu befestigen.

Die Befestigungselemente, Fixierungselemente, Justierungselemente und/oder elastischen Adapter werden vorteilhafterweise über Perforierungen in den Bügeln geführt bzw. an diesen befestigt. Perforierungen sollen dabei erfindungsgemäß Durchbrüche und/oder Löcher mit oder ohne Gewinde in den Befestigungselementen darstellen. In diese Perforierungen, die vollständig über die Bügel verteilt sein können, können Befestigungselemente wie beispielsweise Haken, Stäbe, Klammern, Nadeln, Faden, Fadenhalter und/oder Federn geführt werden. Auch ist es möglich einzelne Befestigungselemente wie beispielsweise Federn über die Bügel zu stecken und eine Stabilisierung eines Gewebepräparats im Arbeitsbereich zu ermöglichen Die Befestigungselemente können dabei so durch die Perforierungen geführt werden, dass sie einenends in einer Perforierung eines Bügels und anderenends in der Perforierung desselben oder eines anderen Bügels aufliegen bzw. dass die Befestigungselemente in den Perforierungen verschraubt oder verklemmt werden. Die Befestigungselemente ermöglichen insofern die Fixierung von Gewebepräparaten oder dienen als Operationshilfsmittel. Dabei ist es möglich, dass die Befestigungselemente nur singulär d.h. einzeln als Operationswerkzeug oder Operationshilfsmittel an den Bügeln und/oder den Halteelementen vorhanden oder mehrfach an den Bügeln und/oder den Halteelementen angeordnet sind.

In einer besonderen Ausgestaltung weist das chirurgische Simulationsgerät eine Grundplatte und/oder Arbeitsplatte als Auflagefläche oder Arbeitsfeld auf, die zumindest teilweise eine Aussparung umfassen. Die Aussparung kann dabei dergestalt sein, dass die Aussparung eine flächige Materialabtragung in Teilbereichen der Grundplatte und/oder Arbeitsplatte umfasst, d.h. eine zumindest in Teilbereichen flächige Materialvertiefung darstellt. Es ist jedoch auch möglich, dass die Aussparung in der Grundplatte und/oder Arbeitsplatte als Durchbruch ausgestaltet ist. Die Aussparung ist dabei in der Regel im mittleren Bereich der Grundplatte und/der Arbeitsplatte angeordnet und kann kreisförmig, oval, rechteckig oder auch polygon ausgestaltet sein. Im Bereich der Aussparung kann in einer lateralen Bohrung mindestens ein Fixierungselement angeordnet sein.

Die Fixierungselemente können beispielsweise im Bereich der Aussparung auch als Metallstäbe oder Gummis vorhanden sein und die Aussparung linienförmig durchziehen bzw. die Aussparung in Teilbereichen linienförmig ausfüllen. Die Fixierungselemente können über laterale Bohrungen im Bereich der Aussparung mit der Grundplatte und/oder Arbeitsplatte verbunden bzw. mit dieser verschraubt werden. Die Bohrungen können dabei durchgängig oder sacklochartig ausgestaltet sein. Es ist jedoch auch möglich, dass die Fixierungselemente über Justierungselemente an der Grundplatte und/oder Arbeitsplatte befestigt werden.

Die Grundplatte und/oder Arbeitsplatte kann eine Aussparung aufweisen, die schienenförmig durchzogen ist bzw. die Aussparung kann linienförmig mit Auflageelementen ausgefüllt sein. Erfindungsgemäß können an den Auflageelementen Fixierungselemente befestigt werden, die entlang der schienenförmigen Oberfläche der Auflageelemente eine Justierung der Fixierungselemente an der Grundplatte und/oder Arbeitsplatte nach Bewegung, beispielsweise durch Verschiebung ermöglichen. So ist es möglich schlittenförmige Aufsätze auf den Justierungselementen zu bewegen und zu verschieben, um diese in eine gewünschte Position für ein Gewebepräparat für einen Operateur zu bringen. Die schlittenförmigen Aufsätze können zur besseren Befestigungsmöglichkeit eines Gewebepräparates über Kugelgelenke verfügen, d.h. um ein Gewebepräparat in einem geneigten Winkel befestigen zu können. Die schlittenförmigen Aufsätze können insbesondere Klammern oder Schraubzwingen umfassen. Nach Positionierung der Fixierungselemente werden diese an den Justierungselementen mit Schrauben gehalten.

Die Justierungselemente können als Teil des Materials der Grundplatte und/oder der Arbeitsplatte aus diesem als Materialbestandteil ausgefräst sein und eine grobe Oberflächenstruktur in Form einer Riffelung aufweisen. Dies ermöglicht eine stufenähnliche Justierung der Fixierungselemente an den Justierungselementen. Es können aber auch in einer besonderen Ausführungsform des Erfindungsgegenstandes Justierungselemente an der Grundplatte und/oder Arbeitsplatte befestigt werden, die nicht Teil der Grundplatte oder Arbeitsplatte waren, beispielsweise als Einsatz.

An der Grundplatte und/oder Arbeitsplatte können ebenso wie an den Halteelementen unmittelbar Befestigungselemente angeordnet sein. In einer besonderen Ausführungsform befinden sich radial an der Grundplatte Bohrungen, die eine Schraub-, Haft- oder Steckverbindung der Grundplatte mit der Arbeitsplatte ermöglichen, d.h. es kann über Schrauben, Nieten, Magnete oder Lagerstifte die Arbeitsplatte auf der Grundplatte befestigt werden. Zentral im mittleren Bereich der Arbeitsplatte kann eine Bohrung vorhanden sein, über die ein Stativ an der Arbeitsplatte befestigt werden kann. Dieses Stativ dient dazu, das chirurgische Simulationsgerät in der Höhe variabel einstellen zu können. Die Maße des Stativs betragen in der Regel ¼" oder 3/8".

Es ist erfindungsgemäß jedoch auch vorgesehen, dass die Grundplatte und/oder Arbeitsplatte selbstständig als einzelne Basis bzw. Auflagefläche für ein chirurgisches Simulationsgerät dienen kann, d.h. dass keine Befestigung der Arbeitsplatte auf der Grundplatte erfolgt und die Grundplatte oder Arbeitsplatte einzeln als Auflagefläche fungiert. Es können alle voran genannten Fixierungselemente, Befestigungselemente, Justierungselemente und/oder flexiblen Adapter an der Grundplatte oder Arbeitsplatte befestigt werden oder an diesen vorhanden sein. Wird beispielsweise nur die Grundplatte als Basis bzw. Auflagefläche verwendet, so muss die Arbeitsplatte nicht zwingend als Teil des chirurgischen Simulationsgerätes an der Grundplatte vorhanden oder befestigt sein. Die Grundplatte kann alleine als Auflagefläche dienen. Ebenso ist es möglich nur die Arbeitsplatte als Basis bzw. Auflagefläche alleine zu verwenden. In diesem Fall wird die Arbeitsplatte um 180° vertikal gedreht und die Schraub-/Haft-/Steckverbindungen der Arbeits- mit der Grundplatte können als Halterungen bzw. Auflageelemente, d.h. Beine für die Arbeitsplatte dienen.

In einer vorteilhaften Ausgestaltung des Erfindungsgegenstands ist die Grundplatte und/oder Arbeitsplatte im Wesentlichen kreisförmig ausgebildet. Im Wesentlichen kreisförmig bedeutet vorliegend, dass die Grundplatte und/oder Arbeitsplatte die Form einer Kreisscheibe, eines Ovals oder einer Ellipse haben kann. Es ist jedoch auch möglich, dass die Grundplatte und/oder Arbeitsplatte rechteckig oder polygon ausgestaltet ist. Der Vorteil einer kreisförmigen Ausgestaltung ist, dass das chirurgische Simulationsgerät gedreht werden kann, ohne dass der Operateur an den Kanten hängen bleiben kann.

In einer weiteren vorteilhaften Ausgestaltung sind zwischen den Halteelementen ein Winkelmesser und/oder ein Lineal angeordnet. Im Fall der Ausgestaltung des Erfindungsgegenstands mit einer Grundplatte und/oder Arbeitsplatte sind der Winkelmesser und/oder ein Lineal sind diese auf der Grund- und/oder Arbeitsplatte angeordnet In allen voran genannten Fällen dient das Lineal bzw. die metrische Skala zur Messung der Länge und der Breite von Organen und Gewebe. Dies ist besonders vorteilhaft in Bezug auf die die Entwicklung des Augenmaßes des Operateurs bei einer Operation. So kann ein Winkelmesser zwischen den Halteelementen oder auf der radialen Außenseite der Grundplatte und/oder Arbeitsplatte angeordnet sein, um beispielsweise die Lage von Gefäßen bei Gefäßanasthomosen zu bestimmen.

In einer weiteren vorteilhaften Ausgestaltung sind die Befestigungs- und/oder Fixierungselemente über elastische Adapter an den Halteelementen und/oder den Bügeln oder im Falle der besonderen Ausgestaltung des Erfindungsgegenstands mit Grundplatte und/oder Arbeitsplatte an diesen befestigt. Die Befestigung der Befestigungselemente und/oder Fixierungselemente an den Halteelementen und/oder den Bügeln oder der Grundplatte und/oder der Arbeitsplatte kann geboten sein, um eine möglichst uneingeschränkte Bewegungsfreiheit des Operateurs im Bereich des Arbeitsfeldes zu gewährleisten. Unter elastischen Adaptern sind vorliegend formelastische, zylinderförmige Träger zu verstehen, die eine Befestigung von Haken, Klammern, Nadeln, Faden, Gummis, Schraubzwingen, Lasern und/oder Fadenhaltern ermöglichen. Die elastischen Adapter können in einer besonderen Ausführungsvariante teleskopartig ausgebildet sein, d.h. sie können verlängerbar und/oder formelastisch ausgestaltet sein. Insbesondere kann eine verlängerbare und/oder formelastische Ausgestaltung über einen Metalldraht mit regulierbarer Spannung erfolgen, wobei die Spannung über ein Torsionselement bzw. eine Torsionsbewegung regulierbar ist. Es ist auch denkbar eine verlängerbare und/oder formelastische Ausgestaltung mit Hilfe einer Formgedächtnislegierung zu erzielen.

Eine Anordnung der Befestigungs- und/oder Fixierungselemente über elastische Adapter kann insbesondere bei Lasern und/oder Fadenhaltern notwendig sein, die in bestimmten Bereich oberhalb oder neben dem Arbeitsfeld angeordnet werden sollen. Es ist daher auch denkbar, dass an den elastischen Adaptern selbst, die an den Halteelementen und/oder den Bügeln oder der Grundplatte und/oder Arbeitsplatte befestigt sind, die Befestigungs- und/oder Fixierungselemente befestigt und die elastischen Adapter unmittelbar mit den Halteelementen und/oder den Bügeln oder der Grundplatte und/oder Arbeitsplatte verbunden werden. Dies insbesondere dann, wenn beispielsweise mit Hilfe von Lasern eine Orientierung des Operateurs in Bezug auf eine Operationstechnik, insbesondere Schnittzeichnung erfolgen und/oder mit Hilfe der Laser selbst eine Schnittführung durchgeführt werden soll.

Ferner ist der Erfindungsgegenstand in einer vorteilhaften Ausgestaltung mit Halterungen versehen. Halterungen sind erfindungsgemäß Auflageelemente auf der Unterseite der Halteelemente oder der Arbeits- und/oder Grundplatte, d.h. der dem Arbeitsfeld abgewandten Seite, zu verstehen, um auf der Auflagefläche eine standfeste Positionierung des Erfindungsgegenstands zu gewährleisten. Die Auflageelemente können in einer bestimmten Ausgestaltung mindestens drei Beine, vorteilhafterweise vier Beine aufweisen. Die Beine können aus Metall, Gummi oder einem Werkstoff wie beispielsweise Metall mit Gummiüberzug sein, wobei die Beine über Schrauben mit der Grundplatte verbunden werden. Die Schrauben können aber auch als beinartige Halterungen selbst verwendet werden. Besonders vorteilhaft ist eine Ausgestaltung in der die Schrauben als Beine selbst magnetisch sind oder Magnete beinhalten. Es können jedoch in einer besonderen Ausgestaltung der Halterungen auch direkt an den Halteelementen oder der Arbeits- und/oder Grundplatte Magnete und/oder Saugnäpfe verwendet werden. Die Auflageelemente können einzeln an den Haltelementen befestigt sein oder über die beinartigen Halterungen gestülpt werden. Saugnäpfe verhindern insbesondere auf glatten Oberflächen wie beispielsweise Holztischen, Keramikunterlagen ein Verrutschen der erfindungsgemäßen Vorrichtung. Es ist daher möglich, dass ein Verrutschen lediglich über die Saugwirkung der Saugnäpfe verhindert wird. Es ist aber auch möglich, dass ein Verrutschen des Erfindungsgegenstands durch Wirkung der beinartigen magnetischen Halterungen, insbesondere auf metallischem Untergrund erreicht wird bzw. durch die synergetische Wirkung von Saugnäpfen und Magneten zusammen, die eine besonders starke Verbindung zum Untergrund bewirken und ein Verrutschen verhindern, d.h. dass Magnete und Saugnäpfe in Kombination verwendet werden können.

Die erfindungsgemäße Vorrichtung dient zu medizinischen Trainingszwecken und fördert und verbessert die chirurgische Fertigkeit, operative Methodik und die Entwicklung des Augenmaßes des Operateurs, welche mit isolierten Organ- und Gewebepräparaten durchgeführt werden kann. Die bequeme Organ- bzw. Gewebefixierung wird durch die beschriebene Konstruktion dieser Erfindung und der dazugehörenden Bestandteile ermöglicht. Insbesondere erstreckt sich der Anwendungsbereich für Trainingszwecke auf Bereiche wie Herstellung chirurgischer Knoten, Schneidtechniken mit Hilfe einer Laserausrichtung und Lineal mit metrischer Skala, Hautnähte, Annaht von Drainagen, Herz-, Thoraxchirurgie, Aortachirurgie, Koronararterien-Bypässe, Klappenchirurgie, Bronchialanastomosen, Speiseröhreanastomosen, minimal-invasiver Klappenchirurgie, Ersatz der Aorta Ascendens, Gefäßchirurgie, Gefäßanastomosen aller Art, insbesondere ohne Assistenten, Darmanastomosen, plastische und ästhetische Chirurgie insbesondere Dekortikation mit Schneidtechniken, Mikrochirurgie, insbesondere Mikroanastomosen, Gynäkologie, Urologie, Unfallchirurgie, Neurochirurgie, Augenchirurgie, Veterinärmedizin in chirurgischen Bereichen, wobei auch Tiere oder Tierpräparate verwendet werden können.

Die Erfindung wird anhand der nachfolgenden Figuren nochmals eingehend beschrieben.

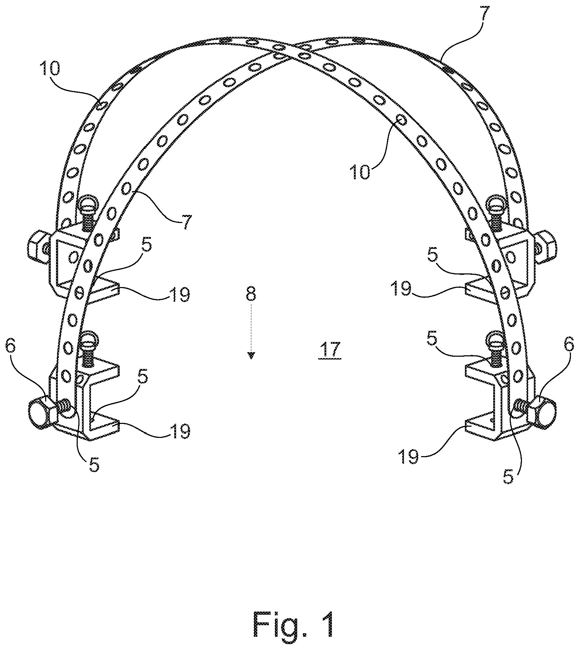

Figur 1 zeigt ein chirurgisches Simulationsgerät (1) in einer schematischen Ansicht. Es sind vier Halteelemente (19) zu erkennen, die um ca. 90° versetzt zueinander angeordnet sind. Die Halteelemente (19) sind c-förmig ausgestaltet und weisen Bohrungen (5) auf, d.h. sie können an einer Auflagefläche (17) mit Hilfe von Schrauben befestigt werden, die durch die Bohrungen (5) geführt werden. Ferner sind an den Halteelementen Bohrungen (5) vorhanden, wobei in jeder Bohrung für einen Bügel (7) in jedem Halteelement (19) ein Lagerstift (6) angeordnet ist, über die die Bügel (7) geführt werden. Jeder Bügel (7) ist bogenförmig ausgestaltet und überspannt die Auflagefläche (17), die ein das Arbeitsfeld (8) aufspannt, das unterhalb der bogenförmigen Bügel (7) generiert wird. Das Arbeitsfeld (8) wird radial durch die Halteelemente (19) und durch den Bereich begrenzt, der durch koaxiale Bewegung bzw. Verschwenkung mindestens eines Bügels (7) entlang einer Kreislinie generiert werden kann. Weiterhin ist zu erkennen, dass die Bügel (7) Perforierungen (10) aufweisen, durch die Befestigungselemente (9), Fixierungselemente (18), Justierungselemente (4) und/oder Adapter (14) geführt werden können.

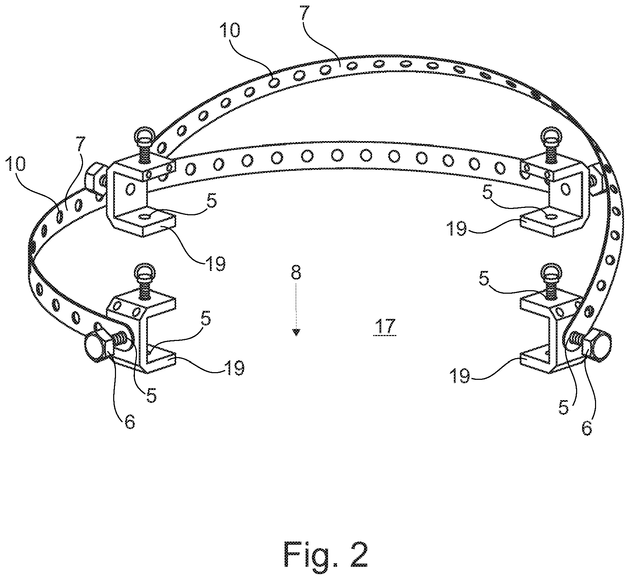

In Figur 2 ist ein chirurgisches Simulationsgerät (1) in einer schematischen Ansicht analog zur Figur 1 dargestellt, wobei die Bügel (7) um die Lagerstifte (6) so gedreht sind, dass sie in einer Ebene mit der Auflagefläche (17) oder dem Arbeitsfeld (8) liegen.

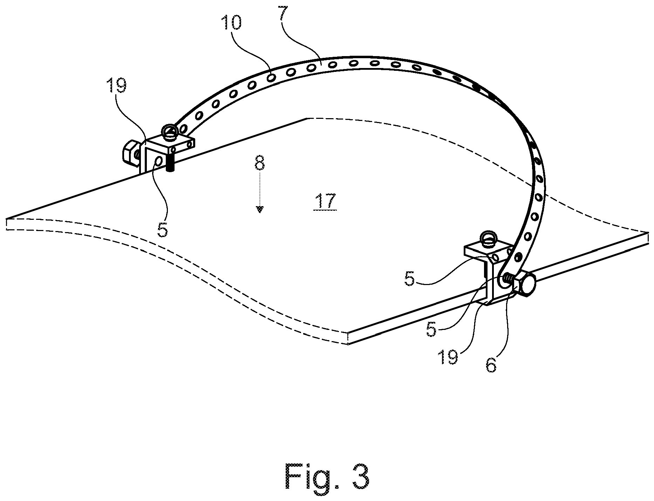

Aus Figur 3 ist zu erkennen wie an einer beliebigen Auflagefläche (17) Halteelemente (19) über Schrauben befestigt sind. Durch die diagonale bzw. diametrale Anordnung der Halteelemente (19) an der Auflagefläche (17) kann die Auflagefläche (17) überspannt werden, wobei der perforierte Bügel (7) über Lagerstifte (6) in den Halteelementen (19) geführt wird. Vorliegend ist der Bügel (7) so gedreht, dass der Bügel (7) in einer Ebene mit der Auflagefläche (17) oder dem Arbeitsfeld (8) liegt. Durch die Perforierungen (10) des Bügels (7) können Befestigungselemente (9), Fixierungselemente (18), Justierungselemente (4) und/oder Adapter (14) geführt werden.

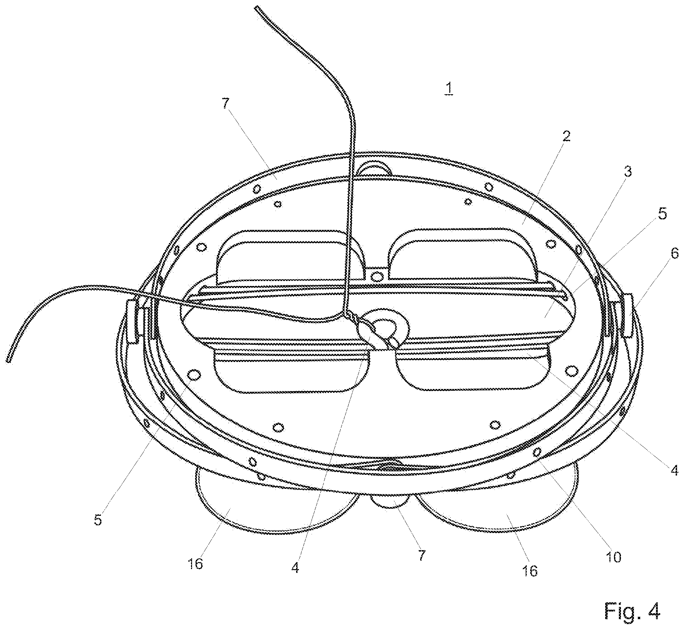

Figur 4 zeigt ein chirurgisches Simulationsgerät (1) in einer perspektivischen Aufsicht. Man erkennt eine kreisförmige Grundplatte (2) mit einer im Wesentlichen zentrisch angeordneten Aussparung (3), in dem ein haken- oder ösenförmiges Fixierungselement (4) angeordnet ist. Im Bereich der Aussparung (3) befinden sich vorliegend weitere Fixierungselemente (4) die beispielsweise Metallstäbe oder Gummis darstellen können und die Aussparung (3) linienförmig durchziehen bzw. die Aussparung (3) in Teilbereichen linienförmig ausfüllen. An den Fixierungselementen (4) können beispielsweise chirurgische Knoten oder Gewebepräparate befestigt werden, was vorliegend durch die Befestigung eines Fadens mit Knoten an dem haken- oder ösenförmiges Fixierungselement (4) dargestellt ist. Die Fixierungselemente (4) können über laterale Bohrungen (5) im Bereich der Aussparung (3) mit der Grundplatte (2) verbunden werden, beispielsweise indem sie verspannt oder mit der Grundplatte (2) verschraubt werden. Die Bohrungen (5) können dabei durchgängig oder sacklochartig ausgestaltet sein. Lateral befinden sich ferner an der Grundplatte (2) vier Stellen mit Bohrungen (nicht dargestellt), die zur Aufnahme von Lagerstiften (6) dienen, über die Bügel (7) geführt sind. Die Bügel (7) sind koaxial über Lagerstifte (6) gesteckt, wobei die Lagerstifte (6) einander diametral gegenüberliegen. Vorliegend sind die Enden der halbkreisförmigen Bügel (7) konzentrisch um die kreisförmige Grundplatte (2) angeordnet, d.h. die Bügel (7) sind nicht aufgestellt und überdecken somit das Arbeitsfeld (nicht dargestellt) nicht. Die Bügel (7) sind als halbkreisförmige Bögen ausgestaltet, deren Enden über Perforierungen (10) der Bügel (7) auf die Lagerstifte (6) gesteckt werden. Ferner ist zu erkennen, dass radial an der Grundplatte (2) Bohrungen (5) vorhanden sind, die eine Schraub-, Magnet- oder Steckverbindung der Grundplatte (2) mit einer Arbeitsplatte (11) ermöglichen. Schließlich sind auf der der Grundplatte (2) und/oder Arbeitsplatte (11) abgewandten Seite Halterungen (nicht dargestellt) vorhanden, die eine standfeste Positionierung des Erfindungsgegenstands auf einem Untergrund gewährleisten. Die Halterungen können Beine, mindestens drei, vorteilhafterweise vier Beine umfassen. Die Beine können aus Gummi oder einem Werkstoff wie beispielsweise Metall mit Gummiüberzug sein, wobei die Beine über Schrauben mit der Grundplatte (2) verbunden werden. Vorliegend sind Saugnäpfe (16) zu erkennen. Diese Saugnäpfe (16) werden über die beinartigen Halterungen gestülpt und verhindern insbesondere auf glatten Oberflächen wie beispielsweise Holztischen, Keramikunterlagen oder Metalltischen ein Verrutschen der chirurgischen Simulationsvorrichtung (1) beim Einsatz. Die Halterungen können mit Magneten oder magnetisch ausgestaltet sein. Die Saugnäpfe (16) können für eine verbesserte Standfestigkeit zusätzlich über die Halterungen gestülpt werden.

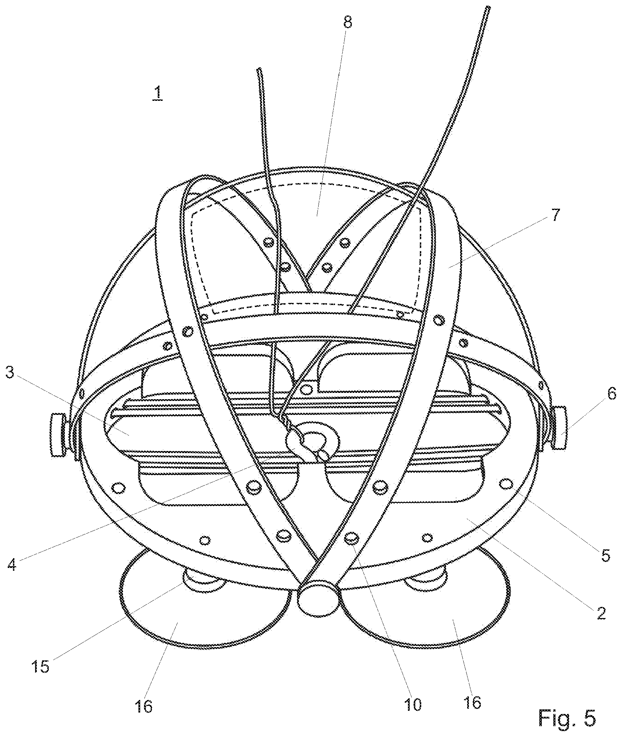

In Figur 5 erkennt man ein chirurgisches Stimulationsgerät (1) in einer perspektivischen Aufsicht analog zu Figur 1, wobei die Bügel (7) aufgeklappt um die Grundplatte (2) angeordnet sind und das Arbeitsfeld (8) überdecken. Über Perforierungen (10) an den Bügeln (7) sind die Enden der Bügel (7) koaxial über Lagerstifte (6) geführt, wobei die Lagerstifte (6) einander diametral gegenüberliegen. Durch eine Schwenkbewegung der Bügel (7) wird der Bereich der Grundplatte (2) mit oder ohne Arbeitsplatte (11) zumindest teilweise durch die Bügel (7) überdeckt. Vorliegend sind vier halbkreisförmige Bügel (7) über vier einander diagonal gegenüberliegende Lagerstifte (6) geführt, sodass der Arbeitsbereich des Arbeitsfelds (8) durch Schwenkung der Bügel (7) in der Größe variiert werden kann, d.h. der Arbeitsbereich kann vergrößert oder verkleinert werden. Durch die Anordnung und Schwenkung von vier Bügeln (7) in die gleiche Richtung zur Mitte der Grundplatte (2) ist das Arbeitsfeld (8) durch die durch die Bügel (7) aufgespannte trapezartige Fläche begrenzt. Ferner erkennt man auf der dem Arbeitsfeld (8) abgewendeten Seite der Grundplatte (2) Halterungen (15), über die Saugnäpfe (16) geführt sind.

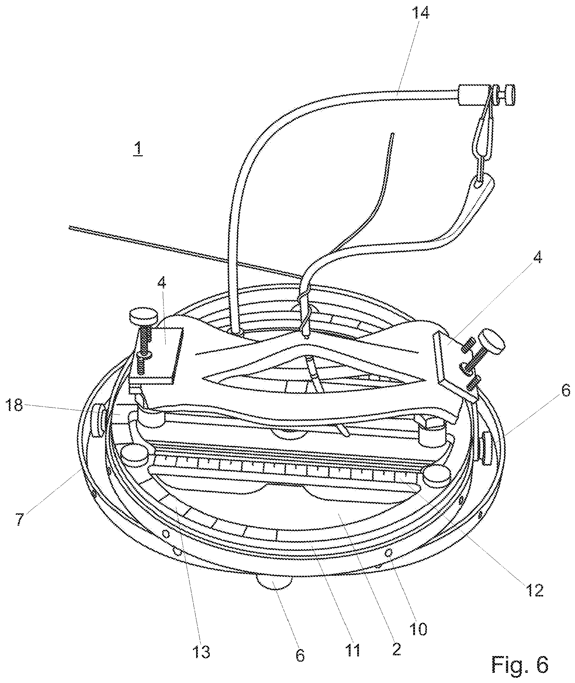

Figur 6 zeigt ein chirurgisches Simulationsgerät (1) in einer perspektivischen Aufsicht, bei dem die Grundplatte (2) mit einer Arbeitsplatte (11) verbunden ist. Die Verbindung der Arbeitsplatte (11) mit der Grundplatte (2) erfolgt über Schraub-, Magnet- oder Steckelemente wie Schrauben, Lagerstifte (6), Magnete oder Nieten, die in Bohrungen (nicht dargestellt) der Grundplatte (2) und Arbeitsplatte (11) eingelassen sind. Wie zu erkennen ist, weist die Arbeitsplatte (11) einen Winkelmesser (13) und/oder ein Lineal (12) auf. Das Lineal (12) bzw. die metrische Skala dient zur Messung der Länge und der Breite von Organen und Gewebe. Der Winkelmesser (13) auf der radialen Außenseite der Arbeitsplatte (11) dient beispielsweise dazu die Lage von Gefäßen bei Gefäßanastomosen zu bestimmen. Weiterhin erkennt man in Figur 3 Bügel (7), die koaxial über Lagerstifte (6) gesteckt sind, wobei die Enden der halbkreisförmigen Bügel (7) konzentrisch um die kreisförmige Grundplatte (2) angeordnet sind, d.h. die Bügel (7) sind nicht aufgestellt und überdecken das Arbeitsfeld (nicht dargestellt) der Grundplatte (2) und/oder Arbeitsplatte (11) nicht. Ferner erkennt man im mittleren Bereich der Arbeitsplatte (11) die Anordnung von Fixierungselementen (4). Als Fixierungselemente (4) dienen vorliegend zwei endseitige Schraubzwingen, wobei diese auf Justierungselementen (18) befestigt sind. Die Fixierungselemente (4) können einerseits dazu dienen, an diesen eine Fixierung eines externen Materials, beispielsweise eines Fadens als chirurgischer Knoten vorzunehmen oder aber zur Befestigung eines Gewebepräparats, wobei die Fixierungselemente (4) an der Grundplatte (2) oder im Bereich der Aussparung (3) der Grundplatte (2) oder an der Arbeitsplatte (11) über Justierungselemente (18) angeordnet sein können. Ferner können elastische Adapter (14) an der Grundplatte (2) und/oder Arbeitsplatte (11) befestigt werden. Vorliegend zeigt Figur 3 einen formelastischen, zylinderförmigen Adapter (14), an welchem ein Karabinerhaken mit einer biegsamen Drainage-Attrappe befestigt und um die ein Faden gezogen ist.

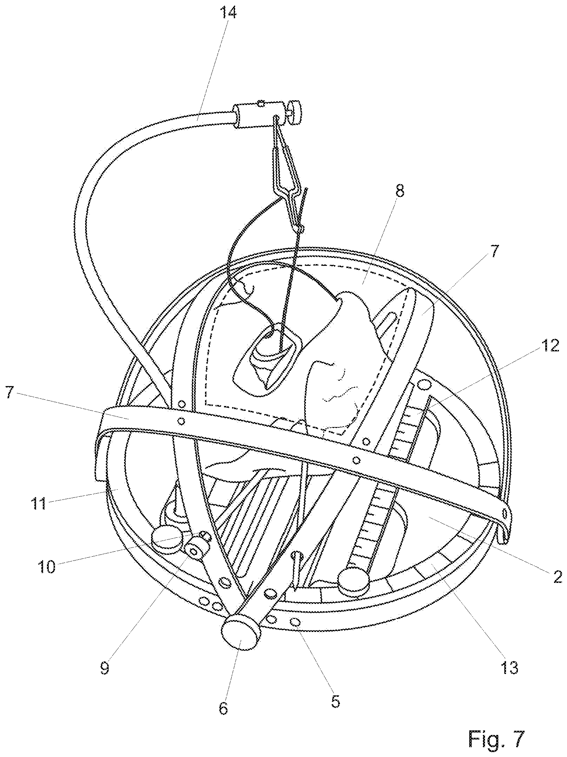

Figur 7 offenbart ein chirurgisches Stimulationsgerät (1) in einer perspektivischen Aufsicht analog zu Figur 3, wobei die Bügel (7) aufgeklappt und das Arbeitsfeld (8) bogenförmig überdecken. In Perforierungen (10) an den Bügeln (7) sind Befestigungselemente (9) in Form von Stäben geführt, die ein schematisch angedeutetes Gewebepräparat tragen. Durch eine Schwenkbewegung der Bügel (7) ist der Bereich der Grundplatte (2) mit oder ohne Arbeitsplatte (11) zumindest teilweise durch die Bügel (7) überdeckt. Vorliegend sind vier halbkreisförmige Bügel (7) über vier einander diagonal gegenüberliegende Lagerstifte (6) geführt, sodass der Arbeitsbereich des Arbeitsfelds (8) durch die zwischen dem durch die vier Bügel (7) aufgespannte trapezartige Fläche begrenzt ist. Ferner erkennt man einen elastischen Adapter (14), der an der Grundplatte (2) und/oder Arbeitsplatte (11) befestigt ist und an welchem ein Karabinerhaken mit einem Faden befestigt ist, wobei die Annaht eines Hilfsobjekts bei einer Operation wie beispielsweise einer Drainage oder das Nähen eines Teilbereichs eines Gewebepräparats dargestellt ist.

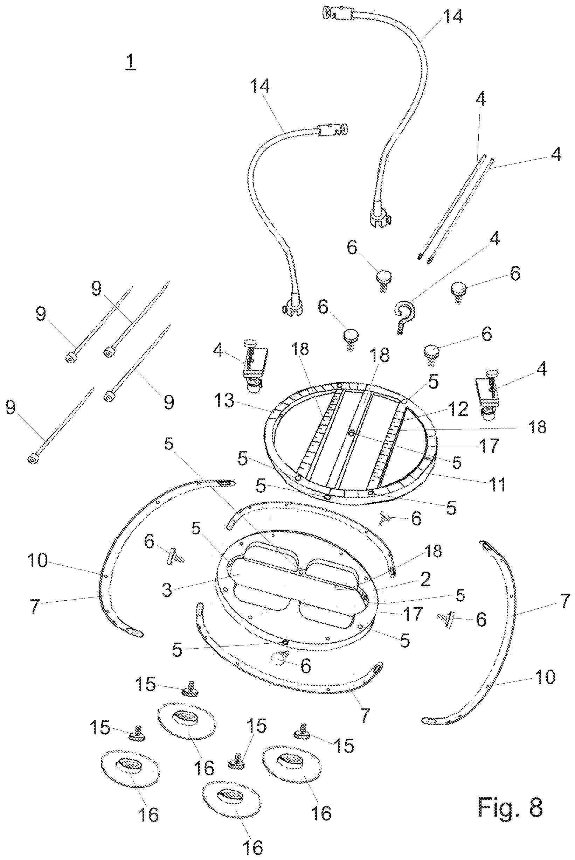

In Figur 8 ist ein chirurgisches Simulationsgerät (1) in einer Explosionszeichnung dargestellt. Man erkennt im mittleren Bereich der Abbildung eine kreisförmige Grundplatte (2) und eine kreisförmige Arbeitsplatte (11) mit lateralen Bohrungen (5), an denen Bügel (7) mit Hilfe von Schrauben, Nieten oder Lagerstiften (6) befestigt werden können. Auch erkennt man ein haken- oder ösenförmiges Fixierungselement (4), das in einer Aussparung (3) der Grundplatte (2) in einer zentralen Bohrung (5) angeordnet sein kann. Im Bereich der Aussparung (3) können sich weitere Fixierungselemente (4) befinden, die beispielsweise Metallstäbe oder Gummis darstellen können und die in lateralen Bohrungen (5) im Bereich der Aussparung (3) geführt werden oder befestigt sind und die Aussparungen (3) linienförmig durchziehen bzw. die Aussparung (3) in Teilbereichen linienförmig ausfüllen können. An den Fixierungselementen (4) können beispielsweise chirurgische Knoten simuliert oder werden, was durch die Befestigung eines Fadens mit Knoten an dem haken- oder ösenförmiges Fixierungselement (4) erfolgen kann. Die vorgenannten Fixierungselemente (4) können auch in radialen Bohrungen (5) der Arbeitsplatte (11) befestigt werden. Im mittleren Bereich der Arbeitsplatte (11) befinden sich weitere Bohrungen (5), in die eine stativartige Vorrichtung eingeführt werden kann und über die das chirurgische Simulationsgerät (1) in der Höhe variabel eingestellt werden kann. Eine solche stativartige Vorrichtung weist in der Regel ein Maß von ¼" oder 3/8" auf.

Ferner erkennt man mittleren Bereich der Figur 8 Fixierungselemente (4), die als Schraubzwingen ausgestaltet sind. Die Fixierungselemente (4) können über Justierungselemente (18) an der Grundplatte (2) und/oder Arbeitsplatte (11) befestigt werden. Die Fixierungselemente (4) können entlang der schienen- bzw. linienförmigen Oberfläche der Justierungselemente (18) befestigt werden und ermöglichen eine Bewegung entlang der Justierungselemente (18) an der Grundplatte (2) und/oder Arbeitsplatte (11) bis sich diese in einer gewünschten Position für den Operateur befinden. Nach Positionierung der Fixierungselemente (4) werden diese an den Justierungselementen (18) mit Schrauben befestigt.

Die Justierungselemente (18) können als Teil des Materials der Grundplatte (2) und/oder der Arbeitsplatte (11) aus diesen als Materialbestandteil ausgefräst sein und können eine grobe Oberflächenstruktur in Form einer Riffelung aufweisen. Dies ermöglicht eine stufenähnliche Justierung der Fixierungselemente (4) an den Justierungselementen (18). Es können aber auch in einer besonderen Ausführungsform des Erfindungsgegenstandes Justierungselemente (18) an der Grundplatte (2) und/oder Arbeitsplatte (11) befestigt werden, die nicht Teil der Grundplatte (2) oder Arbeitsplatte (11) waren oder sind. Dabei kann die Grundplatte (2) und/oder Arbeitsplatte (11) einen Winkelmesser (13) und/oder ein Lineal (12) aufweisen.

Weiterhin erkennt man, dass vier Bügel (7) mit Hilfe von vier Lagerstiften (6) an der Grundplatte (2) oder der Arbeitsplatte (11) befestigt werden können. Es ist möglich, dass durch die laterale Anordnung der halbkreisförmigen Bügel (7) um die kreisförmige Grundplatte (2) oder Arbeitsplatte (11) bei Bewegung der Bügel (7) um 45° um die Lagerstifte (6) zur Mitte der Grundplatte (2) oder der Arbeitsplatte (11) ein trapezförmiges Arbeitsfeld (nicht eingezeichnet) aufgespannt wird. Die Bügel (7) begrenzen das Arbeitsfeld das durch die durch die vier Bügel (7) begrenzt wird, wobei die Bügel (7) die Grundplatte (2) und/oder Arbeitsplatte (11) bogenförmig überspannen.

Durch die Bügel (7) können Befestigungselemente (9) geführt werden, die vorliegend in Form von Stäben dargestellt sind. Die Befestigungselemente (9) werden vorteilhafterweise über Perforierungen (10) in den Bügeln (7) geführt und an diesen befestigt. Perforierungen (10) sollen dabei erfindungsgemäß Durchbrüche und/oder Löcher mit oder ohne Gewinde in den Befestigungselementen (9) darstellen. In diese Perforierungen (10), die vollständig über die Bügel (7) verteilt sein können, können Befestigungselemente (9) wie beispielsweise Haken, Stäbe, Klammern, Nadeln, Faden, Fadenhalter und/oder Federn geführt werden. Die Befestigungselemente (9) können dabei so durch die Perforierungen (10) geführt werden, dass sie einenends in einer Perforierung (10) eines Bügels (7) und anderenends in der Perforierung (10) desselben oder eines anderen Bügels (7) aufliegen bzw. dass die Befestigungselemente (9) in den Perforierungen (10) verschraubt werden.

Im oberen Bereich der Figur 8 sind elastische Adapter (14) zu erkennen. Die elastischen Adapter (14) ermöglichen als formelastische, zylinderförmige Träger eine Befestigung von Haken, Klammern, Nadeln, Faden, Gummis, Schraubzwingen, Lasern und/oder Fadenhaltern. Die elastischen Adapter (14) können in einer besonderen Ausführungsvariante teleskopartig ausgebildet sein, d.h. sie können verlängerbar und/oder formelastisch ausgestaltet sein. Es kann geboten sein die elastischen Adapter (14) an den Befestigungs- (9) und/oder Fixierungselemente (4), insbesondere bei Lasern und/oder Fadenhaltern, zu befestigen, da dies zu einer besseren Sicht und Operationsführung in bestimmten Bereichen oberhalb oder neben dem Arbeitsfeld (nicht dargestellt) dienen kann. Es ist jedoch auch möglich die elastischen Adapter (14) selbst an der Grundplatte (2) und/oder Arbeitsplatte (11) zu befestigen und daran Befestigungselemente (9) und/oder Fixierungselemente (4) anzuordnen.

Radial an der Grundplatte (2) befinden sich Bohrungen (5), über die eine Schraub-, Magnet- oder Steckverbindung der Grundplatte (2) mit der Arbeitsplatte (11) möglich ist, d.h. es kann über Schrauben, Nieten, Magnete oder Lagerstifte (6) die Arbeitsplatte (11) auf der Grundplatte (2) befestigt werden und so eine Auflagefläche (17) bilden. Es ist erfindungsgemäß jedoch auch vorgesehen, dass die Grundplatte (2) und/oder Arbeitsplatte (11) selbstständig als einzelne Basis bzw. Auflagefläche (17) für ein chirurgisches Simulationsgerät (1) dienen kann, d.h. dass keine Befestigung der Arbeitsplatte (11) auf der Grundplatte (2) erfolgt und die Grundplatte (2) oder Arbeitsplatte (11) einzeln als Basis bzw. Auflagefläche (17) fungiert. Es können alle in der vorliegenden Anmeldung genannten Fixierungselemente (4), Befestigungselemente (9), Justierungselemente (18) und/oder flexiblen Adapter (14) an der Grundplatte (2) oder Arbeitsplatte (11) befestigt werden. Wird beispielsweise nur die Grundplatte (2) als Basis bzw. Auflagefläche (17) verwendet, so muss die Arbeitsplatte (11) nicht zwingend als Teil des chirurgischen Simulationsgerätes (1) an der Grundplatte (2) vorhanden oder befestigt sein. Die Grundplatte (2) kann alleine als Auflagefläche (17) dienen. Ebenso ist es möglich nur die Arbeitsplatte (11) als Basis bzw. Auflagefläche (17) alleine zu verwenden. In diesem Fall wird die Arbeitsplatte (2) um 180° vertikal gedreht und die Schraub-/Steck-/Magnet-verbindungen bzw. Lagerstifte (6) zur Verbindung der Arbeitsplatte (11) mit der Grundplatte (2) dienen als Halterungen (15), d.h. Beine für die Arbeitsplatte (11).

Im unteren Bereich der Figur 8 sind auf der der Grundplatte (2) und/oder Arbeitsplatte (11) abgewandten Seite Halterungen (15) vorhanden, die eine standfeste Positionierung des Erfindungsgegenstands auf einem Untergrund gewährleisten. Die Halterungen (15) umfassen vorliegend vier Beine, wobei die Beine aus Gummi oder einem Werkstoff wie beispielsweise Metall mit Gummiüberzug bestehen und wobei die Beine über magnetische Schrauben oder Schrauben mit Magneten mit der Grundplatte (2) und/oder Arbeitsplatte (11) verbunden werden können. Vorliegend sind zu den Halterungen (15) auch Saugnäpfe (16) zu erkennen. Diese Saugnäpfe (16) werden über die beinartigen Halterungen (15) gestülpt und verhindern insbesondere auf glatten Oberflächen wie beispielsweise Holztischen, Keramikunterlagen oder Metalltischen ein Verrutschen der chirurgischen Simulationsvorrichtung (1) beim Einsatz. Die Saugnäpfe (16) können für eine verbesserte Standfestigkeit über die Halterungen (15) gestülpt werden, wobei die Halterungen (15) selbst magnetisch oder mit Magneten ausgestaltet sein können.

### Bezugszeichenliste

- 1: Chirurgisches Simulationsgerät
- 2: Grundplatte
- 3: Aussparung
- 4: Fixierungselement
- 5: Bohrungen
- 6: Lagerstiften
- 7: Bügel
- 8: Arbeitsfeld
- 9: Befestigungselemente
- 10: Perforierung
- 11: Arbeitsplatte
- 12: Lineal
- 13: Winkelmesser
- 14: Adapter
- 15: Halterungen
- 16: Saugnäpfe
- 17: Auflagefläche
- 18: Justierungselemente
- 19: Halteelemente

## Patentansprüche

1. Chirurgisches Simulationsgerät (1) zur Fixierung von Organ- und Gewebepräparaten, aufweisend mindestens zwei Halteelemente (19), die an einer Auflagefläche (17) fixiert sind, wobei lateral an den Halteelementen (19) an mindestens einer Stelle eine Bohrung (5) zur Aufnahme von einem Lagerstift (6) vorhanden ist, um den koaxial mindestens ein auf einer Kreis- oder Rechtecklinie bewegbarer, perforierter Bügel (7) angeordnet und durch die Bewegung des Bügels (7) die Auflagefläche (17) bogenförmig überspannbar ist,
wobei durch die Bewegung des Bügels (7) als Rahmenelement an den Halteelementen (19) ein in der Größe variables Arbeitsfeld (8) einstellbar ist, welches das chirurgische Simulationsgerät nach außen begrenzt, wobei an den perforierten Halteelementen (19) oder an den perforierten Bügeln (7) Befestigungselemente (9) und/oder Fixierungselemente (4) für die Aufnahme von Organ- und Gewebepräparaten, Operationswerkzeugen, sowie Operationshilfsmitteln angeordnet sind.

2. Chirurgisches Simulationsgerät (1) nach Anspruch 1,
wobei die Bügel (7) als Rahmenelement einen radialen Durchmesser in einem Bereich von 0,5 cm bis 5 cm und eine Länge in einem Bereich von 5 cm bis 50 cm aufweisen und/oder halbkreisförmig oder rechteckig ausgestaltet sind.

3. Chirurgisches Simulationsgerät (1) nach Anspruch 1 oder 2,
wobei die Halteelemente (19) an der Auflagefläche (17) mit Hilfe von Schraub- oder Federelementen verklemmt sind.

4. Chirurgisches Simulationsgerät (1) nach einem der voranstehenden Ansprüche,
wobei die Halteelemente (19) c-förmig oder klammerförmig ausgestaltet sind.

5. Chirurgisches Simulationsgerät (1) nach einem der voranstehenden Ansprüche,
wobei zusätzlich zu den Befestigungselementen (9) und Fixierungselementen (4) an den Halteelementen (19) oder Bügeln (7) Justierungselemente (18) und/oder elastische Adapter (14) angeordnet sind.

6. Chirurgisches Simulationsgerät (1) nach einem der voranstehenden Ansprüche,
wobei eine Grundplatte (2) und/oder Arbeitsplatte (11) als Auflagefläche (17) und Halteelement (19) dient, wobei Befestigungselemente (9) und/oder Fixierungselemente (4) an der Grundplatte (2) und/oder Arbeitsplatte (11), sowie mindestens ein Bügel (7) angeordnet sind.

7. Chirurgisches Simulationsgerät (1) nach Anspruch 6,
wobei die Grundplatte (2) und/oder Arbeitsplatte (11) eine Aussparung (3) als flächige Vertiefung oder einen Durchbruch in der Grundplatte (2) und/oder der Arbeitsplatte (11) aufweist, wobei in der Aussparung (3) zumindest in Teilbereichen weitere Befestigungselemente (9) und/oder weitere Fixierungselemente (4) angeordnet sind.

8. Chirurgisches Simulationsgerät (1) nach einem der Ansprüche 6 oder 7, wobei an der Grundplatte (2) und/oder der Arbeitsplatte (11) Justierungselemente (18) angeordnet sind, die ein Lineal (12) und/oder ein Winkelmesser (13) umfassen.

9. Chirurgisches Simulationsgerät (1) nach einem der voranstehenden Ansprüche,
wobei die Befestigungs- (9) und/oder Fixierungselemente (4) Stäbe, Haken, Klammern, Nadeln, Faden, Gummis, Fadenhalter, Federn und/oder Schraubzwingen umfassen.

10. Chirurgisches Simulationsgerät (1) nach einem der voranstehenden Ansprüche,
wobei die Halteelemente (19) und/oder die Grundplatte (2) und/oder Arbeitsplatte (11) Halterungen (15) aufweist, wobei die Halterungen (15) Saugnäpfe mit Magneten oder Saugnäpfe mit Adaptern für die Magnetfüße (16) umfassen.

11. Chirurgisches Simulationsgerät (1) nach einem der voranstehenden Ansprüche,
wobei die Halteelemente (19), die Grundplatte (2), die Arbeitsplatte (11), die Befestigungselemente (9), Fixierungselemente (4), Justierungselemente (18) und/oder elastischen Adapter (14) aus Metall, insbesondere eloxiertem Stahl oder Aluminium und/oder aus Kunststoff bestehen.

12. Verwendung eines chirurgischen Simulationsgeräts (1) nach einem der Ansprüche 1 bis 11 zu medizinischen Trainingszwecken, wobei die medizinischen Trainingszwecke insbesondere die Herstellung chirurgischer Knoten, Schneidtechniken, Hautnähte, Annaht von Drainagen, Aortenchirurgie, Herz-Thoraxchirurgie, Koronararterien-Bypässe, Klappenchirurgie, Bronchialanastomosen, Speiseröhreanastomosen, minimal-invasiver Herzchirurgie, Laserchirurgie, Visceralchirurgie, laparoskopische Chirurgie und/oder die Verbesserung des Augenmaßes umfassen.

## Claims

1. Surgical simulation apparatus (1) for fixing organ and tissue preparations, having at least two holding elements (19) which are fixed to a support surface (17), wherein, laterally on the holding elements (19), at at least one site, a bore (5) for receiving a bearing pin (6) is present, around which at least one perforated hoop (7) movable on a circular or rectangular line is arranged coaxially and the support surface (17) can be spanned in an arcuate manner by the movement of the hoop (7), wherein the movement of the hoop (7) as a frame element on the holding elements (19) makes it possible to adjust the size of a variable work field (8) which delimits the surgical simulation apparatus towards the outside, wherein fastening elements (9) and/or fixation elements (4) for receiving organ and tissue preparations, surgical tools and surgical aids are arranged on the perforated holding elements (19) or on the perforated hoops (7).

2. Surgical simulation apparatus (1) according to claim 1, wherein the hoops (7) as a frame element have a radial diameter in a range from 0.5 cm to 5 cm and a length in a range from 5 cm to 50 cm and/or are semicircular or rectangular in shape.

3. Surgical simulation apparatus (1) according to claim 1 or 2, wherein the holding elements (19) are clamped to the support surface (17) with the aid of screw or spring elements.

4. Surgical simulation apparatus (1) according to one of the preceding claims, wherein the holding elements (19) are c-shaped or clamp-shaped.

5. Surgical simulation apparatus (1) according to one of the preceding claims, wherein, in addition to the fastening elements (9) and fixation elements (4), adjustment elements (18) and/or elastic adapters (14) are arranged on the holding elements (19) or hoops (7).

6. Surgical simulation apparatus (1) according to one of the preceding claims, wherein a base plate (2) and/or work plate (11) serves as a support surface (17) and holding element (19), wherein fastening elements (9) and/or fixation elements (4) are arranged on the base plate (2) and/or work plate (11), as well as at least one hoop (7).

7. Surgical simulation apparatus (1) according to claim 6, wherein the base plate (2) and/or work plate (11) has a recess (3) as a flat depression or an opening in the base plate (2) and/or the work plate (11), wherein further fastening elements (9) and/or further fixation elements (4) are arranged in the recess (3) at least in partial regions.

8. Surgical simulation apparatus (1) according to any one of claims 6 or 7, wherein adjustment elements (18), which comprise a ruler (12) and/or a protractor (13), are arranged on the base plate (2) and/or the work plate (11).

9. Surgical simulation apparatus (1) according to one of the preceding claims, wherein the fastening elements (9) and/or fixation elements (4) comprise rods, hooks, clamps, needles, thread, rubbers, thread holders, springs and/or screw clamps.

10. Surgical simulation apparatus (1) according to one of the preceding claims, wherein the holding elements (19) and/or the base plate (2) and/or work plate (11) have holders (15), wherein the holders (15) comprise suction cups with magnets or suction cups with adapters for the magnetic feet (16).

11. Surgical simulation apparatus (1) according to one of the preceding claims, wherein the holding elements (19), the base plate (2), the work plate (11), the fastening elements (9), fixation elements (4), adjustment elements (18) and/or elastic adapters (14) are made of metal, in particular anodized steel or aluminium and/or plastic.

12. Use of a Surgical simulation apparatus (1) according to any one of claims 1 to 11 for medical training purposes, wherein the medical training purposes comprise in particular the production of surgical knots, cutting techniques, skin sutures, suturing of drains, aortic surgery, cardiothoracic surgery, coronary artery bypasses, valve surgery, bronchial anastomoses, esophageal anastomoses, minimally invasive cardiac surgery, laser surgery, visceral surgery, laparoscopic surgery and/or the improvement of visual acuity.

## Revendications

1. Appareil de simulation chirurgical (1) destiné à fixer des préparations d'organes et de tissus, présentant au moins deux éléments de maintien (19) qui sont fixés sur une surface d'appui (17), dans lequel un trou (5) est présent latéralement sur les éléments de maintien (19) en au moins un endroit et est destiné à recevoir une goupille de support (6) autour de laquelle est disposé de manière coaxiale au moins un arceau (7) perforé pouvant se déplacer sur une ligne circulaire ou rectangulaire et la surface d'appui (17) peut être couverte en forme d'arc par le déplacement de l'arceau (7),
dans lequel le déplacement de l'arceau (7), en tant qu'élément de cadre sur les éléments de maintien (19), permet de régler un champ de travail (8) de taille variable qui délimite l'appareil de simulation chirurgical vers l'extérieur, dans lequel des éléments de montage (9) et/ou des éléments de fixation (4) sont disposés sur les éléments de maintien perforés (19) ou sur les arceaux perforés (7) pour la réception de préparations d'organes et de tissus, d'instruments chirurgicaux, ainsi que de moyens auxiliaires chirurgicaux.

2. Appareil de simulation chirurgical (1) selon la revendication 1,
dans lequel les arceaux (7), en tant qu'élément de cadre, présentent un diamètre radial dans une plage allant de 0,5 cm à 5 cm et une longueur dans une plage allant de 5 cm à 50 cm et/ou sont conçus en forme de demi-cercle ou de rectangle.

3. Appareil de simulation chirurgical (1) selon la revendication 1 ou 2, dans lequel les éléments de maintien (19) sont serrés sur la surface d'appui (17) à l'aide d'éléments formant vis ou ressort.

4. Appareil de simulation chirurgical (1) selon l'une des revendications précédentes,
dans lequel les éléments de maintien (19) sont conçus en forme de C ou de pince.

5. Appareil de simulation chirurgical (1) selon l'une des revendications précédentes,
dans lequel, en plus des éléments de montage (9) et des éléments de fixation (4), des éléments d'ajustement (18) et/ou des adaptateurs élastiques (14) sont disposés sur les éléments de maintien (19) ou les arceaux (7).

6. Appareil de simulation chirurgical (1) selon l'une des revendications précédentes,
dans lequel une plaque de base (2) et/ou une plaque de travail (11) servent de surface d'appui (17) et d'élément de maintien (19), dans lequel des éléments de montage (9) et/ou des éléments de fixation (4) sont disposés sur la plaque de base (2) et/ou la plaque de travail (11), ainsi qu'au moins un arceau (7).

7. Appareil de simulation chirurgical (1) selon la revendication 6,
dans lequel la plaque de base (2) et/ou la plaque de travail (11) présentent un évidement (3) sous la forme d'un renfoncement plat ou d'un passage dans la plaque de base (2) et/ou la plaque de travail (11), dans lequel d'autres éléments de montage (9) et/ou d'autres éléments de fixation (4) sont disposés, dans au moins des sections partielles, dans l'évidement (3).

8. Appareil de simulation chirurgical (1) selon l'une des revendications 6 ou 7,
dans lequel des éléments d'ajustement (18) sont disposés sur la plaque de base (2) et/ou la plaque de travail (11), lesquels comprennent une règle (12) et/ou un rapporteur (13).

9. Appareil de simulation chirurgical (1) selon l'une des revendications précédentes,
dans lequel les éléments de montage (9) et/ou les éléments de fixation (4) comprennent tiges, crochets, pinces, aiguilles, fils, élastiques, porte-fils, ressorts et/ou serre-joints à vis.

10. Appareil de simulation chirurgical (1) selon l'une des revendications précédentes,
dans lequel les éléments de maintien (19) et/ou la plaque de base (2) et/ou la plaque de travail (11) présentent des dispositifs de maintien (15), dans lequel les dispositifs de maintien (15) comprennent des ventouses comportant des aimants ou des ventouses comportant des adaptateurs pour les pieds magnétiques (16).

11. Appareil de simulation chirurgical (1) selon l'une des revendications précédentes,
dans lequel les éléments de maintien (19), la plaque de base (2), la plaque de travail (11), les éléments de montage (9), les éléments de fixation (4), les éléments d'ajustement (18) et/ou les adaptateurs élastiques (14) sont en métal, en particulier en acier ou en aluminium anodisé et/ou en matériau synthétique.

12. Utilisation d'un appareil de simulation chirurgical (1) selon l'une des revendications 1 à 11 à des fins d'entraînement médical, dans laquelle les fins d'entraînement médical comprennent en particulier la réalisation de noeuds chirurgicaux, techniques de coupe, sutures cutanées, suture de drains, chirurgie aortique, chirurgie cardio-thoracique, pontages aortocoronariens, chirurgie valvulaire, anastomoses bronchiques, anastomoses oesophagiennes, chirurgie cardiaque mini-invasive, chirurgie au laser, chirurgie viscérale, chirurgie laparoscopique et/ou amélioration de la vue de l'oeil.
